(19) Europäisches Patentamt / European Patent Office / Office européen des brevets

(11) **EP 4 502 716 A1**

(12) **EUROPEAN PATENT APPLICATION**
published in accordance with Art. 153(4) EPC

(43) Date of publication:
05.02.2025 Bulletin 2025/06

(21) Application number: 22935501.1

(22) Date of filing: 31.03.2022

(51) International Patent Classification (IPC):
*G02F 1/035* (2006.01)

(52) Cooperative Patent Classification (CPC):
G02F 1/035

(86) International application number:
PCT/JP2022/016787

(87) International publication number:
WO 2023/188361 (05.10.2023 Gazette 2023/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Sumitomo Osaka Cement Co., Ltd.
Tokyo, 105-8641 (JP)

(72) Inventors:
• NAKATA,Yu
  Tokyo 102-8465 (JP)
• TAKANO,Shingo
  Tokyo 102-8465 (JP)
• MIYAZAKI,Norikazu
  Tokyo 102-8465 (JP)

(74) Representative: Wächter, Jochen et al
Kroher-Strobel
Rechts- und Patentanwälte PartmbB
Bavariaring 20
80336 München (DE)

(54) **OPTICAL WAVEGUIDE ELEMENT, AND OPTICAL MODULATION DEVICE AND OPTICAL TRANSMISSION APPARATUS USING OPTICAL WAVEGUIDE ELEMENT**

(57) In order to provide an optical waveguide element with high electric field efficiency while suppressing a peeling of the low resistivity layer from the substrate and a DC drift, by using a low resistivity layer having a lower electrical resistivity and a thinner layer thickness than the substrate as a buffer layer, and an optical modulation device and an optical transmission apparatus using the same, an optical waveguide element 1 is provided with a substrate 5 with an optical waveguide 10 formed thereon, having an electro-optical effect and a plurality of control electrodes S, G, formed on a front surface side of the substrate 5 with the optical waveguide 10 in between, for applying an electric field to the optical waveguide 10, wherein a low resistivity layer 9 having a lower electric resistivity than the substrate 5 is formed on at least a part of the front surface between the plurality of control electrodes S, G of the substrate 5 and / or at least a part of the back surface of the substrate 5, and the thickness of the low resistivity layer 9 is 200 nm or less.

FIG.2A

EP 4 502 716 A1

## Description

[FIELD OF THE INVENTION]

The present invention relates to an optical waveguide element and an optical modulation device and an optical transmission apparatus using the same, particularly to an optical waveguide element provided with an optical waveguide, electrodes, and the like on a substrate having an electro-optical effect and an optical modulation device and an optical transmission apparatus using the same.

[BACKGROUND ART]

In the field of optical communication and optical measurement, optical modulators with optical waveguide elements are used, in which an optical waveguide by diffusion of titanium (Ti) and control electrodes and the like for modulating optical waves propagating in the optical waveguide are formed on a substrate (hereinafter referred to as LN substrate) having electro-optical effects such as lithium niobate ($LiNbO_3$: hereinafter referred to as LN).

In the conventional LN optical modulator (bulk type LN modulator) using such an LN substrate, the difference in the optical refractive index between the Ti-diffused core portion and the non-diffused portion is small, so that the confinement of light in the optical waveguide is weak and therefore the bending radius of the optical waveguide cannot be reduced, thereby making the size large.

Further, in the LN optical modulator, there is a problem that a polarization charge is generated due to the pyroelectricity and piezoelectricity of the LN substrate, a DC drift that shifts the optimum point of the bias voltage occurs, and so that the degree of modulation changes. Patent Document 1 discloses an improvement in DC drift characteristics using a buffer layer for this problem.

In recent years, the demand for miniaturization of optical devices has been increasing, and miniaturization of LN optical modulators used for optical transmitters is also being considered. For example, as a miniaturized LN optical modulator, the development of a thin film LN optical modulator using a thin film LN of 2 $\mu$m or less is becoming active. It is known that even in this type of optical modulator, the DC drift characteristics peculiar to the LN substrate can be improved by using the buffer layer (See, for example, Patent Documents 2 to 4).

[CITATION LIST]

[PATENT LITERATURE]

[Patent Document 1] Japanese Patent Application Publication No. H5-257105

[Patent Document 2] Japanese Patent Application Publication No. 2020-134875
[Patent Document 3] Japanese Patent Application Publication No. 2021-173791
[Patent Document 4] Japanese Patent Application Publication No. 2021-173792

[SUMMARY OF THE INVENTION]

[TECHNICAL PROBLEM]

According to Patent Document 1, the buffer layer on the surface of the LN substrate has a thickness of 0.25 $\mu$m to 2.5 $\mu$m and is bonded to the LN substrate and the control electrode in an amorphous state. When a thick film as described above is formed on the LN substrate, there is such a problem that a film stress is generated when the temperature changes due to the difference in the coefficient of linear expansion from the LN substrate, which causes the buffer layer to be peeled off.

Further, in the case of an optical waveguide device having a rib-type optical waveguide as disclosed in Patent Documents 2 to 4, there is such a problem that a film stress is applied to the optical waveguide by the thickness of the buffer layer due to a temperature change, so that the refractive index in the optical waveguide is changed, thereby causing a DC drift to occur due to a change in the bias voltage. The problem related to this temperature change is a problem that has become apparent in the miniaturized optical waveguide device. The cause of this problem is that in a small optical waveguide device, since it is used in a state where it is placed close to a driver element including an amplifier circuit for high-frequency signals, the heat generated in the driver element is easily transferred to the optical waveguide element, so that the optical waveguide element is more easily influenced by the temperature change.

Further, in any of the configurations disclosed in Patent Documents 1 to 4, there is a problem that the control electrode and the optical waveguide are separated by the thickness of the buffer layer, so that the electric field efficiency is deteriorated, thereby worsening the modulation response characteristic.

The present invention has been made to solve such a conventional problem, and it is the object of the present invention to provide an optical waveguide element with high electric field efficiency while suppressing a peeling of the low resistivity layer from the substrate and a DC drift, by using a low resistivity layer having a lower electrical resistivity and a thinner layer thickness than the substrate as a buffer layer, and an optical modulation device and an optical transmission apparatus using the same.

[MEANS TO SOLVE PROBLEMS]

In order to solve the above problems, the optical waveguide element according to the present invention comprises: a substrate with an optical waveguide formed thereon, having an electro-optical effect; and a plurality of control electrodes formed on a front surface side of the substrate with the optical waveguide in between, for applying an electric field to the optical waveguide, wherein a low resistivity layer is formed on at least a part of the front surface between the plurality of control electrodes of the substrate and / or at least a part of the back surface of the substrate.

By this configuration, the optical waveguide element according to the present invention can suppress the fluctuation of the bias voltage, by using the low resistivity layer as a buffer layer, efficiently discharging the polarization charge generated on the substrate due to the pyroelectric effect, so that it is possible to improve the DC drift characteristics.

Further, in the optical waveguide element according to the present invention, the ratio of the electrical resistivity $\rho$ of the low resistivity layer to the thickness t of the low resistivity layer may be in the range of $10^6 < \rho/t < 10^{13}$.

By this configuration, the optical waveguide element according to the present invention can improve the DC drift characteristics while maintaining favorable high frequency transmission characteristics.

Further, in the optical waveguide element according to the present invention, the thickness of the low resistivity layer may be 200 nm or less.

By this configuration, in the optical waveguide element according to the present invention, since the low resistivity layer is as thin as 200 nm or less, peeling of the low resistivity layer from the substrate and DC drift are suppressed, while also high electric field efficiency can be achieved.

Further, in the optical waveguide element according to the present invention, the thickness of the substrate may be 2 $\mu$m or less.

By this configuration, the optical waveguide element according to the present invention can achieve a small-sized optical waveguide element.

Further, in the optical waveguide element according to the present invention, the plurality of control electrodes may include a signal electrode to which a modulation signal is applied, a ground electrode, and a bias electrode to which a bias voltage is applied, and the low resistivity layer may be configured to be formed in a region of the substrate to which an electric field due to the modulation signal is applied and / or a region of the substrate to which an electric field due to the bias voltage is applied.

By this configuration, the optical waveguide element according to the present invention can simultaneously achieve favorable high frequency transmission characteristics and favorable DC drift characteristics.

Further, in the optical waveguide element according to the present invention, the low resistivity layer may be configured to be formed between the plurality of control electrodes and the substrate.

By this configuration, the optical waveguide element according to the present invention may be easily manufactured since a low resistivity layer may be formed on the front surface of the substrate.

Further, in the optical waveguide element according to the present invention, the low resistivity layer may be configured to be formed by reducing a part of the substrate.

By this configuration, the optical waveguide element according to the present invention can suppress charging even when a pyroelectric effect is generated by the introduction of the low resistivity layer, and since there is almost no difference in the coefficient of linear expansion between the low resistivity layer and the substrate, the film stress can be reduced and the film peeling can be suppressed.

Further, in the optical waveguide element according to the present invention, the optical waveguide may be a rib-type optical waveguide.

By this configuration, the optical waveguide element according to the present invention can effectively confine light in the optical waveguide of the rib-type optical waveguide.

Further, the optical modulation device according to the present invention comprises any of the above-mentioned optical waveguide elements, a housing that accommodates the optical waveguide element, and an optical fiber that inputs / outputs an optical signal to the optical waveguide element.

Further, the optical modulation device according to the present invention may further be configured to comprise a driver that amplifies a modulation signal input to the optical waveguide element inside the housing.

Further, the optical transmission apparatus according to the present invention comprises any of the above-mentioned optical modulation devices and an electronic circuit that outputs a modulation signal that causes the optical modulation device to perform a modulation operation.

[EFFECT OF THE INVENTION]

The present invention provides an optical waveguide element with high electric field efficiency while suppressing a peeling of the low resistivity layer from the substrate and a DC drift, by using a low resistivity layer having a lower electrical resistivity and a thinner layer thickness than the substrate as a buffer layer, and an optical modulation device and an optical transmission apparatus using the same.

[BRIEF DESCRIPTION OF DRAWINGS]

FIG. 1 is a plan view showing a configuration of an optical waveguide in the optical waveguide element according to the embodiment of the present invention.

FIG. 2A is a diagram showing a first example of a cross-sectional structure including a modulation electrode of the optical waveguide element according to the embodiment of the present invention, and is a cross-sectional view taken along the line A-A of FIG. 1.

FIG. 2B is a diagram showing a second example of a cross-sectional structure including a modulation electrode of the optical waveguide element according to the embodiment of the present invention, and is a cross-sectional view taken along the line A-A of FIG. 1.

FIG. 2C is a diagram showing a third example of a cross-sectional structure including a modulation electrode of the optical waveguide element according to the embodiment of the present invention, and is a cross-sectional view taken along the line A-A of FIG 1.

FIG. 3A is a diagram showing a first example of a cross-sectional structure including a bias electrode of the optical waveguide element according to the embodiment of the present invention, and is a cross-sectional view taken along the line B-B of FIG. 1.

FIG. 3B is a diagram showing a second example of a cross-sectional structure including a bias electrode of the optical waveguide element according to the embodiment of the present invention, and is a cross-sectional view taken along the line B-B of FIG. 1.

FIG. 3C is a diagram showing a third example of a cross-sectional structure including a bias electrode of the optical waveguide element according to the embodiment of the present invention, and is a cross-sectional view taken along the line B-B of FIG. 1.

FIG. 4 is a table showing a comparison between the prior art and the optical waveguide element according to the embodiment of the present invention.

FIG. 5A is a graph showing the propagation loss of the optical waveguide element according to the embodiment of the present invention.

FIG. 5B is a graph showing the frequency at which the propagation loss of the optical waveguide element according to the embodiment of the present invention becomes -6 dB and the DC drift value of the optical waveguide element according to Example 1 of the present invention.

FIG. 6 is a diagram showing the size of a low resistivity layer in the optical waveguide element according to the embodiment of the present invention.

FIG. 7 is a diagram showing a configuration of an optical modulation device and an optical transmission apparatus including an optical waveguide element according to an embodiment of the present invention.

[DETAILED DESCRIPTION OF EMBODIMENTS]

Hereinafter, the embodiment of the optical waveguide element and the optical modulation device and the optical transmission apparatus using the same according to the present invention will be described.

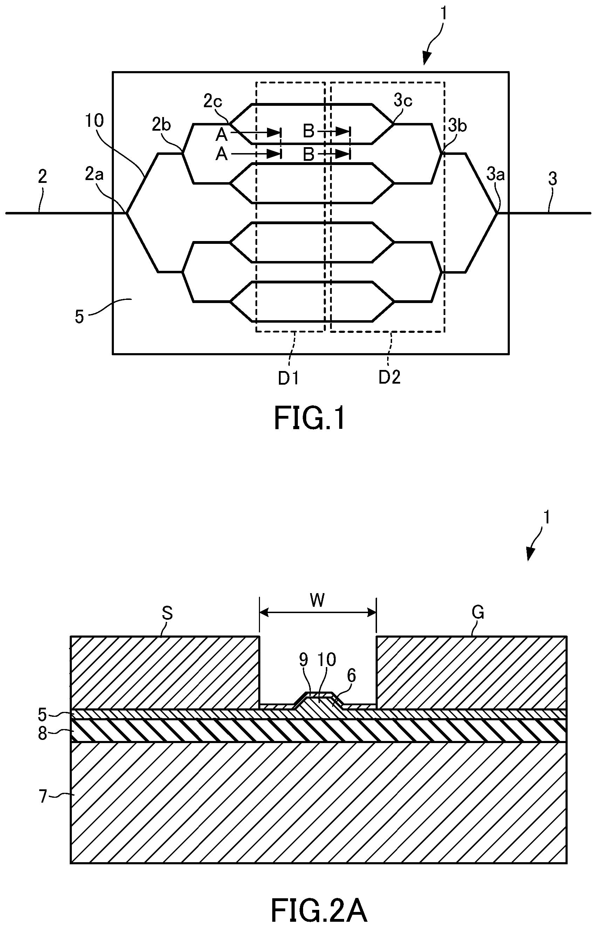

FIG. 1 is a plan view for describing an example of the optical waveguide 10 formed on the substrate 5 constituting the optical waveguide element 1 in the embodiment of the present invention. It should be noted that in FIG. 1, the optical waveguide element 1 is shown in such a way that the width direction of the optical waveguide element 1 is the vertical direction of the page, the longitudinal direction of the optical waveguide element 1 is the horizontal direction of the page, and the thickness direction of the optical waveguide element 1 is the direction perpendicular to the page.

The optical waveguide element 1 shown in FIG. 1 is an optical waveguide element 1 in which a plurality of Mach-Zehnder type optical waveguides are integrated. An optical waveguide in which a plurality of Mach-Zehnder type optical waveguides are combined is also called a nested optical waveguide. The optical waveguide element 1 in which a plurality of Mach-Zehnder type optical waveguides are integrated can generate optical signals corresponding to various modulation methods. As an example, FIG. 1 shows an optical waveguide element 1 in which a plurality of Mach-Zehnder type optical waveguides are integrated, but the present invention is not limited to this structure, and may be an optical waveguide element 1 having, for example, a single Mach-Zehnder type optical waveguide.

As shown in FIG. 1, the optical waveguide element 1 according to the embodiment of the present invention includes an optical waveguide 10 formed on a substrate 5 formed of a material having an electro-optical effect. The optical waveguide element 1 shown in FIG. 1 has a first branch portion 2a for branching an incoming waveguide 2 into which an optical signal is introduced from the outside, and a second branch portion 2b for further branching an optical waveguide 10 branched at the first branch portion 2a, a third branch portion 2c that further branches the optical waveguide 10 branched at the second branch portion 2b, so that eight parallel waveguides in total are formed through three-step branching. The first to third branch portions 2a to 2c are achieved by an optical coupler and the like.

The phase of the optical wave propagating in each parallel waveguide is adjusted, for example, in region D1. A metal modulation electrode (not shown in Fig. 1) is formed in the region D1, and by applying an electric field from an outside signal source to each parallel waveguide via the modulation electrode, the refractive index in the optical waveguide 10 is changed to adjust the propagation speed of the optical waves.

The optical wave propagating in each parallel waveguide is synthesized in the first to third synthesis portions 3a to 3c corresponding to each of the first to third branch portions 2a to 2c described above, and then output from an outgoing waveguide 3 to the outside. To be specific, the optical waveguide element 1 shown in FIG. 1 is provided with a third synthesis portion 3c that synthesizes a parallel waveguide branched at the third branch portion 2c, a second synthesis portion 3b that synthesizes an optical waveguide 10 branched at the second branch portion 2b, and a first synthesis portion 3a that synthesizes the optical waveguide 10 branched at the first branch portion 2a, and an optical signal is output from an outgoing waveguide 3 through a three-step synthesis. Similar to the first to third branch portions 2a to 2c, the first to third synthesis portions 3a to 3c are also achieved by an optical coupler or a polarization synthesizing element and the like.

It should be noted that the optical waveguide 10 of the optical waveguide element 1 shown in FIG. 1 is an example, and the present invention is not limited to such a configuration.

Further, a bias voltage for setting an operating point of the optical waveguide element 1 is applied to the optical waveguide 10. The bias voltage is applied to the optical wave phase-modulated in the region D1 from the outside signal source, for example, via a bias electrode formed in region D2 (not shown in FIG. 1).

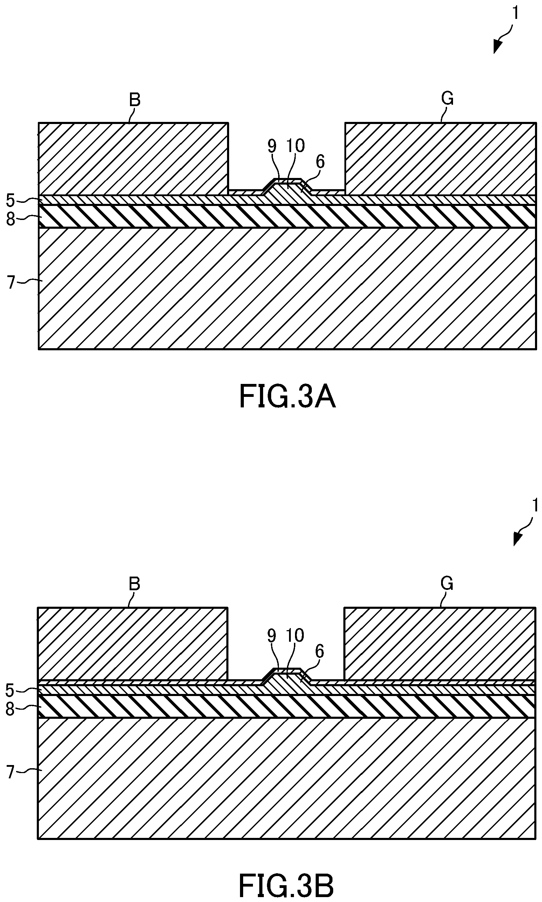

FIGS. 2A to 2C and FIGS. 3A to 3C show cross sectional structures of the optical waveguide element 1 in the embodiment of the present invention in the case that the substrate 5 is X-cut. FIGS. 2A to 2C are cross-sectional views taken along the line A-A of FIG. 1. And FIGS. 3A to 3C are cross-sectional views taken along the line B-B of FIG. 1. It should be noted that in FIGS. 2A to 2C and FIGS. 3A to 3C, the optical waveguide element 1 is shown in such a way that the thickness direction of the optical waveguide element 1 is the vertical direction of the page, the width direction of the optical waveguide element 1 is the horizontal direction of the page, and the longitudinal direction of the optical waveguide element 1 is the direction perpendicular to the page.

As shown in FIGS. 2A to 2C, in the region D1 on the substrate 5, a signal electrode S and a ground electrode G that constitute modulation electrodes are formed on a front surface side of the substrate 5 with the optical waveguide 10 in between. Further, as shown in FIGS. 3A to 3C, in the region D2 on the substrate 5, a bias electrode B and a ground electrode G are formed on a front surface side of the substrate 5 with the optical waveguide 10 in between. The signal electrode S, the ground electrode G and the bias electrode B constitute a plurality of control electrodes for applying an electric field to the optical waveguide 10 to control the optical wave propagating through the optical waveguide 10.

As shown in the cross-sectional structures of FIGS. 2A to 2C and FIGS. 3A to 3C, the optical waveguide element 1 is provided with an insulation layer 8 on a holding substrate 7, and the substrate 5 is provided on the insulation layer 8, and the optical waveguide element 1 has a structure that a low resistivity layer 9 having a lower electrical resistivity than that of the substrate 5 is formed on at least a part of the front surface between the plurality of control electrodes of the substrate 5 or at least a part of the back surface of the substrate 5.

The substrate 5 is formed of a dielectric crystal material having an electro-optical effect. As the substrate 5 in the embodiment of the present invention, for example, an extremely thin plate (thin film) having a thickness of 2 $\mu$m or less, preferably 1 $\mu$m or less, more preferably 0.7 $\mu$m or less can be used. For the substrate 5, for example, LN can be used as a material having an electro-optical effect, but lithium tantalate (LiTaO$_3$), lead lanthanum zirconate titanate (PLZT), and the like may be used. The electrical resistivity of the substrate 5 is, for example, about 10$^{14}$ $\Omega \cdot$ cm.

A rib-type optical waveguide having a rib portion 6 projecting from the front surface of the substrate 5 is formed as the optical waveguide 10 on the substrate 5. Hereinafter, unless otherwise specified, the optical waveguide 10 will be described as a rib-type optical waveguide. The optical waveguide 10, which is a rib-type optical waveguide, can be bent to form a folded structure, so that the length of the optical waveguide element 1 can be shortened. The height of the rib portion 6 is, for example, 2 $\mu$m or less, preferably 1 $\mu$m or less from the front surface of the substrate 5.

It should be noted that in the present invention, it is preferable to use a rib-type optical waveguide having a rib-type substrate on which the rib portion 6 is formed as the optical waveguide 10, but the optical waveguide 10 is not limited to this, and as the optical waveguide 10, an optical waveguide formed in the substrate 5 by thermal diffusion of a metal such as, for example, titanium may be used.

The holding substrate 7 is a member that supplements the strength of the extremely thin substrate 5 and can stably support the insulation layer 8, the low resistivity layer 9, and the control electrodes and the like formed on the substrate 5. The holding substrate 7 is bonded to the insulation layer 8 by a direct bonding method or a film forming method such as CVD. As the material of the holding substrate 7, for example, a material having a lower dielectric constant than the material of the substrate 5 or the same material as the substrate 5 (for example, LN) can be used.

The insulation layer 8 is provided between the holding substrate 7 and the substrate 5. The insulation layer 8 is made of SiO$_2$ having an electrical resistivity of 10$^{16}$ $\Omega \cdot$ cm, for example, to reduce the stress caused by the difference in coefficient of linear expansion between the material of the low resistivity layer 9 and the material of the substrate 5.

The insulation layer 8 can be arranged over the entire lower surface of the substrate 5 regardless of the position of the control electrodes including the modulation electrode (signal electrode S and ground electrode G) and the bias electrode B or the position of the optical waveguide 10.

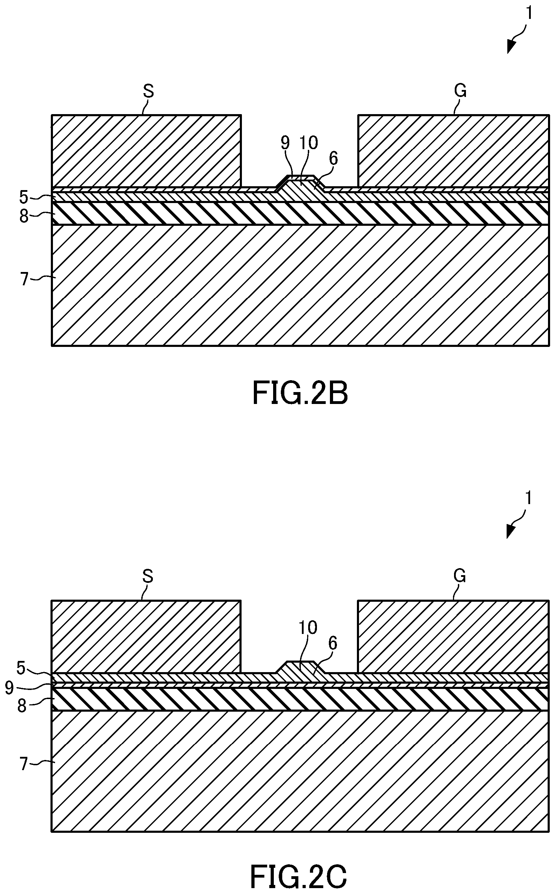

Further, as the material of the low resistivity layer 9 and the insulation layer 8, a material having a refractive index lower than that of the material of the substrate 5 having an electro-optical effect (for example, LN) may be used. In particular, when the low resistivity layer 9 having a refractive index lower than that of the substrate 5 is arranged above the substrate 5, and the insulation layer 8 having a refractive index lower than that of the substrate 5 is arranged the substrate 5 (see, for example, FIGS. 2A and 2B), the effect of confining light within the optical waveguide 10 can be increased and the propagation loss can be efficiently reduced.

The signal electrode S, the ground electrode G, and the bias electrode B, which are control electrodes, are formed by, for example, patterning the electrodes by a photolithography process. The control electrode may be made of an appropriate metal, and the method of forming the control electrode on the substrate 5 or the low resistivity layer 9 is not particularly limited.

The signal electrode S is an electrode to which a high frequency signal (modulation signal) for applying an electric field to the optical waveguide 10 is applied, and is arranged so as to extend in parallel with the optical waveguide 10, for example. Although not shown, the signal electrode S is connected to a signal source and a terminating resistance, and a modulation signal is supplied from the signal source and terminated by the terminating resistance.

The ground electrode G is an electrode connected to a reference potential point, and is arranged so as to extend in parallel with the optical waveguide 10 like the signal electrode S, for example. The signal electrode S and the ground electrode G are provided apart from each other, and an electric field is formed between the signal electrode S and the ground electrode G. The signal electrode S and the ground electrode G constitute, for example, a coplanar line.

The bias electrode B is an electrode to which a bias voltage for setting the operating point of the optical waveguide element 1 is applied, and is arranged so as to extend in parallel with the optical waveguide 10, for example.

The electric field formed between the signal electrode S and the ground electrode G and the electric field formed between the bias electrode B and the ground electrode G are applied to the optical waveguide 10 which is a rib-type optical waveguide. By controlling the electric signal supplied from the signal source and adjusting the electric field strength, the optical wave propagating in the optical waveguide 10 is appropriately modulated.

The low resistivity layer 9 is provided on the front surface or the back surface of the substrate 5 made of a dielectric crystal material, at least in a range where the electric field distribution between the control electrodes acts on the optical wave propagating in the optical waveguide 10. This means that the low resistivity layer 9 is formed in the region of the substrate 5 to which the electric field due to the modulation signal from the signal electrode S is applied and the region of the substrate 5 to which the electric field due to the bias voltage from the bias electrode B is applied.

FIG. 2A shows the configuration in which a low resistivity layer 9 is formed in the region between the signal electrode S and the ground electrode G on the front surface of the rib portion 6 of the substrate 5. FIG. 2B shows the configuration in which a low resistivity layer 9 is formed between the lower surface of the signal electrode S and the ground electrode G and the front surface of the substrate 5 in addition to the front surface of the rib portion 6 of the substrate 5. FIG. 2C shows the configuration in which a low resistivity layer 9 is formed below the rib portion 6, the signal electrode S, and the ground electrode G on the back surface of the substrate 5.

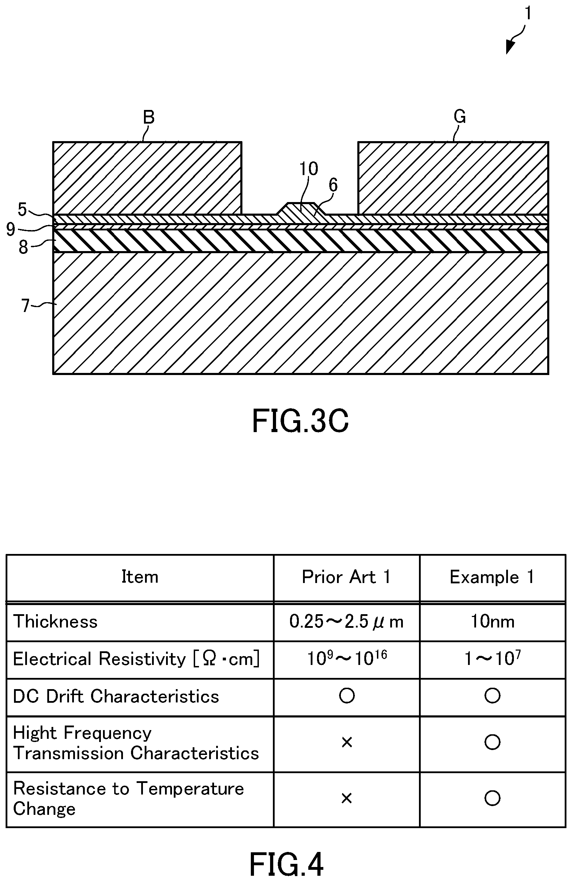

FIG. 3A shows the configuration in which a low resistivity layer 9 is formed in the region between the bias electrode B and the ground electrode G on the front surface of the rib portion 6 of the substrate 5. FIG. 3B shows the configuration in which a low resistivity layer 9 is formed between the lower surface of the bias electrode B and the ground electrode G and the front surface of the substrate 5 in addition to the front surface of the rib portion 6 of the substrate 5. FIG. 3C shows the configuration in which a low resistivity layer 9 is formed below the rib portion 6, the bias electrode B, and the ground electrode G on the back surface of the substrate 5.

It should be noted that in FIGS. 2A to 2C and FIGS. 3A to 3C, the resistivity layer 9 is formed on the entire surface between the signal electrode S and the ground electrode G, and between the bias electrode B and the ground electrode G, but, it does not have to be formed on the entire surface as long as the effect of the present invention is achieved.

The low resistivity layer 9 in the embodiment of the present invention has a thickness thinner than that of the substrate 5, and for example, the thickness is set to be 200 nm or less in consideration of deterioration of high frequency characteristics due to a decrease in resistivity of the low resistivity layer 9. The material used for the low resistivity layer 9 is preferably a material having a lower electrical resistivity than the substrate 5, as well as a material having a lower refractive index than the substrate 5 and excellent light transmittance. For example, when a strong dielectric is used for the substrate 5, a metal oxide such as $Ta_2O_5$, $Nb_2O_5$, $TiO_2$, or a semiconductor doped with a metal element of Group 3 to 18 in the periodic table of elements is listed as a candidate for materials of a low resistivity layer 9.

Other than using the above materials, as one of the methods for forming the low resistivity layer 9 having a lower electrical resistivity than the substrate 5, there is a method of reducing at least a part of the front surface or the back surface of the substrate 5 which is a dielectric crystal to form a reduction layer having a lower oxidation number and conductivity as compared with the substrate 5. Since such a reduction layer can be formed by appropriately reducing (oxygen deficiency) the front surface or the back surface of the substrate 5 by surface treatment using hydrogen plasma, for example, the dielectric crystal structure is maintained. Therefore, it is considered that the substrate 5 and the reduction layer are strongly bonded. When the low resistivity layer 9 is formed as a reduction layer that maintains the dielectric crystal structure of the substrate 5, since there is almost no difference in the coefficient of linear expansion between the low resistivity layer 9 and the substrate 5, film stress is unlikely to occur. Therefore, it is possible to suppress the peeling of the low resistivity layer 9 and the occurrence of DC drift when the temperature changes.

Alternatively, the low resistivity layer 9 may be a layer formed by a composition-controllable film forming method such as chemical vapor deposition (CVD) or atomic layer deposition (ALD). For example, for oxide $MO/MO_x$ and the like, it is possible to form a film having a low resistivity layer 9 to which conductivity is imparted by a method of substituting a part of oxygen O with nitrogen N or a part of element M with a neighboring element (M-1, M+1) in the atomic a method of table.

It should be noted that although FIGS. 2A to 2C and FIGS. 3A to 3C show structure in which the low resistivity layer 9 is provided on either the front surface or the back surface of the substrate 5, the present invention is not limited to these structures , and the low resistivity layer 9 may be provided on both the front surface and the back surface of the substrate 5.

It should be noted that the dielectric crystal such as LN, which is the material of the substrate 5, is a pyroelectric body, and exhibits a pyroelectric effect due to heat generation caused by electrode losses from modulating signals, as well as piezoelectric effects due to stress. Since the low resistivity layer 9 has a lower electrical resistivity than the substrate 5, it is possible to efficiently discharge the polarization charge generated on the substrate 5 due to the pyroelectric effect and the piezoelectric effect and suppress the fluctuation of the bias voltage so that the DC drift characteristics can be improved.

Hereinafter, the details of the optical waveguide element of Example 1 will be described in comparison with the prior art 1 (Patent Document 1: Japanese Patent Application Publication No. H5-257105).

FIG. 4 is a table showing a comparison between the optical waveguide device of the prior art 1 and the optical waveguide element of Example 1 of the present invention. In the optical waveguide element of Example 1, the substrate 5 is an LN substrate, and the low resistivity layer 9 is a reduction layer of the LN substrate.

When the thickness of the reduction layer obtained by reducing a part of the LN substrate becomes 20 nm or more, it is possible that the reduction layer becomes amorphous and loses its crystal structure, resulting in a difference between the coefficient of linear expansion of the reduction layer and that of the LN substrate. Therefore, the thickness of the reduction layer is more preferably 20 nm or less, and further more preferably 10 nm or less. As a preferable structure for reducing the film stress of the reduction layer, in Example 1, the thickness t of the reduction layer is 10 nm.

Since the thickness t of this reduction layer is extremely thin as compared with the prior art 1, the amount of volume change with respect to temperature change is extremely small, so that it is possible to prevent the film from peeling due to the generation of film stress. Further, since the reduction layer has a thin thickness t, the optical waveguide 10 formed in the rib portion 6 is not subjected to a stress change, so that it is possible to prevent the fluctuation of the bias voltage due to such a stress change.

Further, in the optical waveguide element of Example 1, the electrical resistivity $\rho$ of the reduction layer is set to $1\,\Omega \cdot cm$ to $10^7\,\Omega \cdot cm$, and the distance W between the electrodes and the electrode length L are set to a certain constant value. Here, the distance between the electrodes W is, as shown in FIG. 2A, the distance between the signal electrode S and the ground electrode G formed in the region D1. Further, the electrode length L is the length of the acting portion of the signal electrode S formed in the region D1. Here, the acting portion means a portion of the signal electrode S that contributes to the control of the optical wave propagating in the optical waveguide 10.

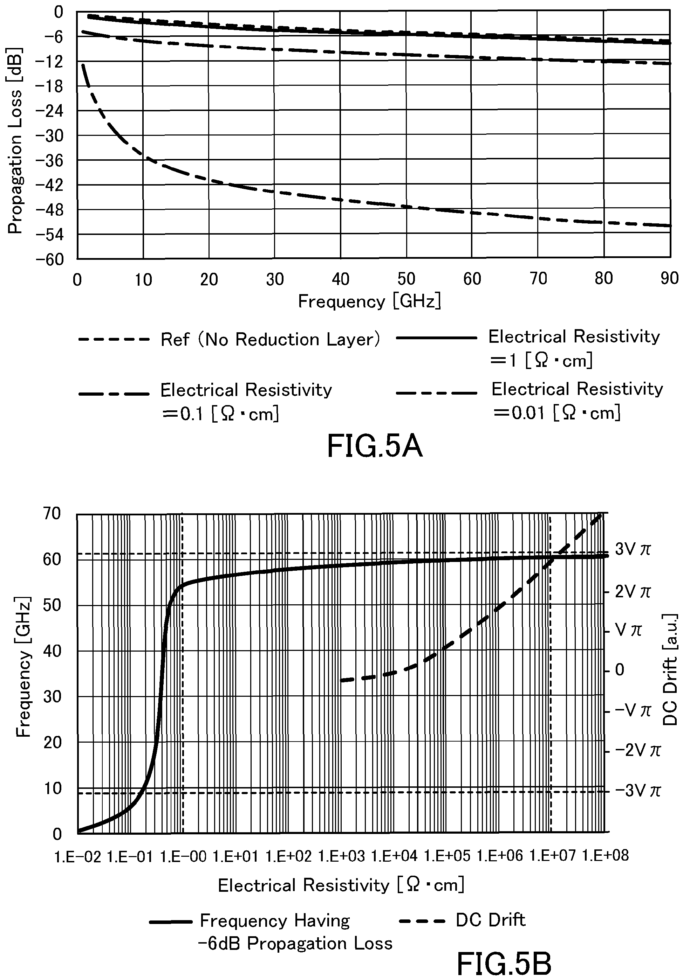

FIG. 5A is a graph showing the propagation loss of the modulation signal propagating through the signal electrode S having the electrode length L for the optical waveguide element of Example 1. This propagation loss is the result of simulation in which the LN substrate without the reduction layer is used as a reference (Ref), and the reduction layer with a thickness t of 10 nm is provided with electrical resistivitiy of $1\,\Omega \cdot cm$, 0.1 $\Omega \cdot cm$, and 0.01 $\Omega \cdot cm$, respectively. From the graph of FIG. 5A, it can be understood that the higher the electrical resistivity of the reduction layer, the lower (favorable) propagation loss is exhibited over a wide band.

FIG. 5B shows the frequency at which the propagation loss of the modulation signal in the graph of FIG. 5A becomes -6 dB, which is the allowable lower limit value, and the DC drift value in a certain time (1 hour or less) of the actually produced optical waveguide element, plotted against the electrical resistivity.

The graphs of FIGS. 5A and 5B show that the propagation loss tends to increase (deteriorate) sharply when the electrical resistivity falls below $1\,\Omega \cdot cm$. This is because a reduction layer having a low electrical resistivity is formed between the signal electrode S and the ground electrode G, so that the state between these electrodes is close to conduction, and it becomes difficult for an electric field to act on the optical waveguide 10. Further, if the electrical resistivity of the reduction layer is too low, there is a problem that the light propagating through the optical waveguide 10 is easily absorbed by the signal electrode S and the ground electrode G. On the other hand, when the electrical resistivity exceeds $1\,\Omega \cdot cm$, the propagation loss tends to saturate, so that this value is set as the lower limit value of the electrical resistivity of the reduction layer.

Further, as the electrical resistivity of the reduction layer becomes higher, the polarization charge generated on the substrate 5 due to the pyroelectric effect and the piezoelectric effect cannot be efficiently discharged, so that the DC drift value increases. Here, $10^7 \, \Omega \cdot$ cm, which is the value of the electrical resistivity when the DC drift becomes three times the half-wavelength voltage $V\pi$, is set as the upper limit value of the electrical resistivity of the reduction layer. It should be noted that if the upper limit value of the electrical resistivity of the reduction layer is $10^4 \, \Omega \cdot$ cm, the DC drift value is less than the half-wavelength voltage $V\pi$, which is more preferable.

Based on the upper limit value and the lower limit value of the electrical resistivity of the reduction layer, it is considered that the ratio of the electrical resistivity $\rho$ of the low resistivity layer 9 to the thickness t of the low resistivity layer 9 is $10^6 < \rho / t < 10^{13}$ to improve the DC drift characteristics while maintaining favorable high frequency transmission characteristics.

On the other hand, in the optical waveguide element of the prior art 1, the thickness of the buffer layer is about 25 to 250 times as thick as the thickness t of the reduction layer of Example 1, so that an electric field is less likely to be applied to the optical waveguide, thereby deteriorating the high frequency transmission characteristics.

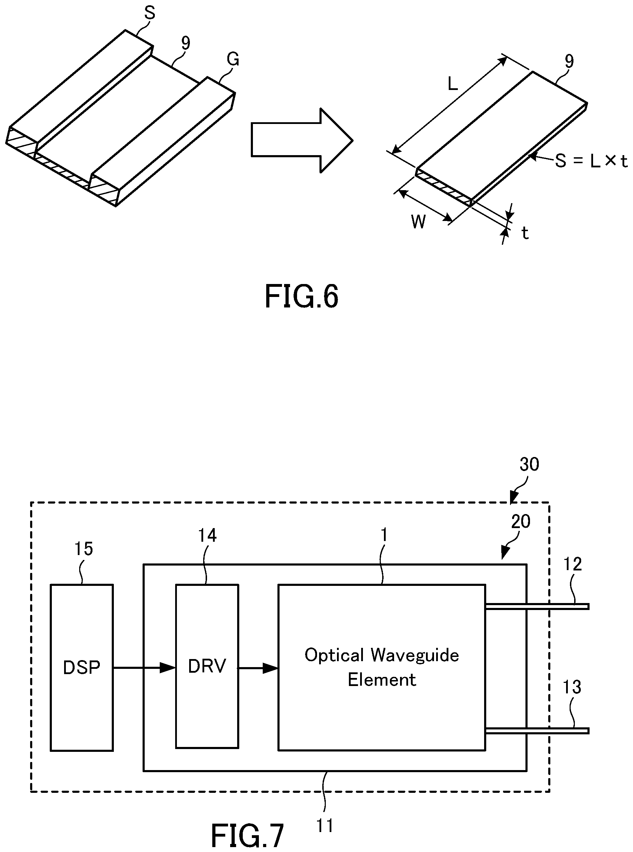

FIG. 6 is a diagram schematically showing a simplified low resistivity layer 9 formed between the signal electrode S and the ground electrode G.

Here, the electric resistance value of the low resistivity layer 9 is expressed as $R_1$, the electric resistance value of the substrate 5 is expressed as $R_2$, and the electric resistance value of the insulation layer 8 is expressed as $R_3$. When the values of $R_2$ and $R_3$ are sufficiently larger than those of $R_1$, $R_1$ dominates the electrical resistivity $\rho'$ in the region where current flows when measuring the electrical resistance between the signal electrode S and the ground electrode G.

Based on the above assumptions, the electric resistance value of the low resistivity layer 9 is R, the electrical resistivity of the low resistivity layer 9 is $\rho$, the thickness of the low resistivity layer 9 is t, the electrode distance between the signal electrode S and the ground electrode G is W, the electrode length of the acting portion of the signal electrode S is L, and the area of the cross section perpendicular to the width direction of the low resistivity layer 9 is $L \times t = S$. At this time, the ratio of the electric resistance value R, the electrical resistivity $\rho$, and the thickness t is expressed by the following equations (1) and (2), respectively.

$$R = \rho \cdot W / Lt \,...\, (1)$$

$$\rho / t = R \cdot L / W \,...\,(2)$$

This means that the value of $\rho / t$ of the low resistivity layer 9 can be easily confirmed by measuring the electric resistance value R, the electrode length L, and the distance W between the electrodes, without performing a destructive test such as electron energy loss spectroscopy (EELS) or X-ray photoelectron spectroscopy (XPS).

FIG. 7 shows a configuration of the optical modulation device 20 and the optical transmission apparatus 30 including the optical waveguide element 1 according to the embodiment of the present invention.

The optical modulation device 20 comprising: a housing 11 that accommodates the optical waveguide element 1 inside thereof; an optical fiber 12 and an optical fiber 13 that inputs / outputs an optical signal to the optical waveguide element1; and a driver circuit (DRV) 14 that amplifies a modulation signal to be input into the optical waveguide element 1.

The optical fiber 12 is an optical fiber for inputting an optical signal from outside of the housing 11 to an incoming waveguide 2 of the optical waveguide element 1. The optical fiber 13 is an optical fiber for outputting the optical signal from an outgoing waveguide 3 of the optical waveguide element 1 to outside of the housing 11. The optical fiber 12 and the incoming waveguide 2 may be directly connected or may be optically connected through a spatial optical system. Similarly, the optical fiber 13 and the outgoing waveguide 3 may be directly connected or may be optically connected through a spatial optical system.

The optical transmission apparatus 30 includes an optical modulation device 20 and a digital signal processor (DSP) 15 as an electronic circuit that outputs a modulation signal that causes the optical modulation device 20 to perform a modulation operation. The driver circuit 14 is adapted to amplify the modulation signal output from the DSP 15 and is adapted to apply it to the signal electrode S of the optical waveguide element 1.

The driver circuit 14 and the DSP 15 can be arranged outside the housing 11, but can also be arranged inside the housing 11. In particular, by arranging the driver circuit 14 inside the housing 11, it is possible to further reduce the propagation loss of the modulation signal from the driver circuit 14.

As described above, the optical waveguide element 1 according to the embodiment can suppress the fluctuation of the bias voltage, by using the low resistivity layer 9 having a lower electrical resistivity $\rho$ than the substrate 5, as a buffer layer, efficiently discharging the polarization charge generated on the substrate 5 due to the pyroelectric effect, so that it is possible to improve the DC drift characteristics.

Further, since the optical waveguide element 1 according to the present embodiment uses the low resistivity layer 9 thinner than the conventional buffer layer, the amount of volume change of the low resistivity layer 9 with respect to the temperature change is extremely small, so that it is possible to prevent the film of the low resistivity layer 9 from peeling due to the generation of film stress. Further, in the optical waveguide element 1 according to the present embodiment, since the low resistivity layer 9 is thin, the optical waveguide 10 formed in the rib portion 6 is not subjected to a stress change, so that it is possible to prevent the fluctuation of the bias voltage due to such a stress change. Further, in the optical waveguide element 1 according to the present embodiment, since the low resistivity layer 9 is thin, the control electrodes and the optical waveguide can be arranged close to each other, thereby high electric field efficiency can be achieved.

Further, in the optical waveguide element 1 according to the present embodiment, the ratio of the electrical resistivity $\rho$ of the low resistivity layer 9 to the thickness t is in the range of $10^6 < \rho/t < 10^{13}$, so that it is possible to improve the DC drift characteristics while maintaining favorable high frequency transmission characteristics.

Further, in the optical waveguide element 1 according to the present embodiment, since the thickness of the substrate is 2 $\mu$m or less, it can achieve a small-sized optical waveguide element.

Further, in the optical waveguide element 1 according to the present embodiment, the low resistivity layer 9 is formed in the region of the substrate 5 to which the electric field due to the modulation signal is applied and the region of the substrate 5 to which the electric field due to the bias voltage is applied. By this configuration, the optical waveguide element 1 according to the present embodiment can simultaneously achieve favorable high frequency transmission characteristics and favorable DC drift characteristics.

Further, in the optical waveguide element 1 according to the present embodiment, the low resistivity layer 9 may be formed between the lower surface of the signal electrode S, the ground electrode G, and the bias electrode B and the front surface of the substrate 5. In this case, the optical waveguide element 1 according to the present embodiment can be easily manufactured since the low resistivity layer 9 may be formed on the front surface of the substrate 5.

Further, in the optical waveguide element 1 according to the present embodiment, when the low resistivity layer 9 is formed by reducing a part of the substrate 5, since the low resistivity layer 9 having conductivity can be easily formed and at the same time, there is almost no difference in the coefficient of linear expansion between the low resistivity layer 9 and the substrate 5, the film stress can be suppressed.

Further, in the optical waveguide element 1 according to the present embodiment, since the optical waveguide 10 is a rib-type optical waveguide, light can be effectively confined.

[EXPLANATION OF REFERENCE NUMERALS]

1 Optical Waveguide Element

2 Incoming Waveguide
2a First Branch Portion
2b Second Branch Portion
2c Third Branch Portion
3 Outgoing Waveguide
3a First Synthesis Portion
3b Second Synthesis Portion
3c Third Synthesis Portion
5 Substrate
6 Rib Portion
7 Holding Substrate
8 Insulation Layer
9 Low Resistivity Layer
10 Optical Waveguide
11 Housing
12, 13 Optical Fiber
14 Driver Circuit
15 DSP
20 Optical Modulation Device
30 Optical Transmission Apparatus
B Bias Electrode
G Ground Electrode
S Signal Electrode

**Claims**

1. An optical waveguide element, comprising:

   a substrate with an optical waveguide formed thereon, having an electro-optical effect; and
   a plurality of control electrodes formed on a front surface side of the substrate with the optical waveguide in between, for applying an electric field to the optical waveguide, wherein
   a low resistivity layer is formed on at least a part of the front surface between the plurality of control electrodes of the substrate and / or at least a part of a back surface of the substrate.

2. The optical waveguide element according to claim 1, wherein
   a ratio of an electrical resistivity $\rho$ of the low resistivity layer to a thickness t of the low resistivity layer is in the range of $10^6 < \rho/t < 10^{13}$.

3. The optical waveguide element according to claim 1 or 2, wherein
   a thickness of the low resistivity layer is 200 nm or less.

4. The optical waveguide element according to claim 1 or 2, wherein
   a thickness of the substrate is 2 $\mu$m or less.

5. The optical waveguide element according to claim 1 or 2, wherein

the plurality of control electrodes include a signal electrode to which a modulation signal is applied, a ground electrode, and a bias electrode to which a bias voltage is applied, and
the low resistivity layer is formed in a region of the substrate to which an electric field due to the modulation signal is applied and / or a region of the substrate to which an electric field due to the bias voltage is applied.

6. The optical waveguide element according to claim 1 or 2, wherein
the low resistivity layer is formed between the plurality of control electrodes and the substrate.

7. The optical waveguide element according to claim 1 or 2, wherein
the low resistivity layer is formed by reducing a part of the substrate.

8. The optical waveguide element according to claim 1 or 2, wherein the optical waveguide is a rib-type optical waveguide.

9. An optical modulation device, comprising:

the optical waveguide element according to claim 1 or 2;
a housing that accommodates the optical waveguide element; and
an optical fiber that inputs / outputs an optical signal to the optical waveguide element.

10. The optical modulation device according to claim 9, further comprising a driver circuit that amplifies a modulation signal input to the optical waveguide element inside the housing.

11. An optical transmission apparatus, comprising:

the optical modulation device according to claim 10; and
an electronic circuit that outputs a modulation signal that causes the optical modulation device to perform a modulation operation.

FIG.1

FIG.2A

FIG.2B

FIG.2C

FIG.3A

FIG.3B

FIG.3C

| Item | Prior Art 1 | Example 1 |
|---|---|---|
| Thickness | $0.25 \sim 2.5 \mu$ m | 10nm |
| Electrical Resistivity [$\Omega \cdot$cm] | $10^9 \sim 10^{16}$ | $1 \sim 10^7$ |
| DC Drift Characteristics | ○ | ○ |
| Hight Frequency Transmission Characteristics | × | ○ |
| Resistance to Temperature Change | × | ○ |

FIG.4

FIG.5A

FIG.5B

**FIG.6**

**FIG.7**

## INTERNATIONAL SEARCH REPORT

| | International application No. |
|---|---|
| | **PCT/JP2022/016787** |

### A. CLASSIFICATION OF SUBJECT MATTER

**G02F 1/035**(2006.01)i
FI: G02F1/035

According to International Patent Classification (IPC) or to both national classification and IPC

### B. FIELDS SEARCHED

Minimum documentation searched (classification system followed by classification symbols)

G02F1/00-1/125; 1/21-7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-173792 A (FUJITSU OPTICAL COMPONENTS LTD) 01 November 2021 (2021-11-01) paragraphs [0012]-[0029], fig. 1 | 1-8 |
| Y | | 1-11 |
| Y | WO 2021/261605 A1 (SUMITOMO OSAKA CEMENT CO LTD) 30 December 2021 (2021-12-30) paragraphs [0072]-[0101], fig. 10-11 | 9-11 |
| Y | WO 2021/131273 A1 (SUMITOMO OSAKA CEMENT CO LTD) 01 July 2021 (2021-07-01) paragraphs [0039]-[0076], [0098]-[0105], fig. 1-3, 7 | 1-11 |
| A | JP 2015-014715 A (TDK CORP) 22 January 2015 (2015-01-22) entire text, all drawings | 1-11 |
| A | US 2012/0099812 A1 (JDS UNIPHASE CORPORATION) 26 April 2012 (2012-04-26) entire text, all drawings | 1-11 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 June 2022** | **28 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/016787**

| Patent document cited in search report | | | Publication date (day/month/year) | Patent family member(s) | | | Publication date (day/month/year) |
|---|---|---|---|---|---|---|---|
| JP | 2021-173792 | A | 01 November 2021 | US 2021/0325760 A1 paragraphs [0027]-[0045], fig. 1 | | | |
| WO | 2021/261605 | A1 | 30 December 2021 | JP | 2022-001907 | A | |
| WO | 2021/131273 | A1 | 01 July 2021 | JP | 2021-105650 | A | |
| JP | 2015-014715 | A | 22 January 2015 | (Family: none) | | | |
| US | 2012/0099812 | A1 | 26 April 2012 | (Family: none) | | | |

Form PCT/ISA/210 (patent family annex) (January 2015)

## REFERENCES CITED IN THE DESCRIPTION

**Patent documents cited in the description**

- JP H5257105 B
- JP 2020134875 A
- JP 2021173791 A
- JP 2021173792 A